# DEMANDE DE BREVET EUROPEEN

(11) **EP 1 068 990 A1**
(43) Date de publication de la demande: **17.01.2001**
(21) Numéro de dépôt: 00401851.1
(22) Date de dépôt: 29.06.2000
(51) Int. Cl.: B60Q 1/076, B60Q 1/14, B60Q 1/115

(54) **Projecteur pour véhicule automobile avec un cache à multipositions**

(30) Priorité: 13.07.1999 FR 9909086
(71) Demandeur: VALEO VISION, 93012 Bobigny Cédex (FR)
(72) Inventeur: Di Tonno, Massimo, 93012 Bobigny Cedex (FR)
(74) Mandataire: Lemaire, Marc

(57) **Abrégé**

La présente invention concerne un projecteur pour véhicule automobile, comprenant un bloc optique comportant une source lumineuse, un réflecteur du genre elliptique dont un premier foyer est situé au voisinage de la source, une lentille convergente dont un plan focal passe au voisinage d'un second foyer du réflecteur, et un cache (50) prévu entre le réflecteur et la lentille, qui présente un bord (51) définissant un premier profil de coupure particulier pour le faisceau lumineux émis.

Selon l'invention, il est prévu des moyens de pivotement du bloc optique autour de l'axe optique (O) du projecteur pour amener sélectivement le cache dans deux positions, une première position dans laquelle ledit bord du cache est positionné sur le trajet des rayons lumineux pour former un faisceau lumineux avec ledit profil de coupure, et une seconde position dans laquelle ledit bord du cache est positionné sur le trajet des rayons lumineux de manière décalée angulairement par rapport à la première position pour former un faisceau lumineux avec un deuxième profil de coupure.

## Description

La présente invention concerne de façon générale des projecteurs de type elliptique pour véhicules automobiles.

Un projecteur de ce type comprend de manière classique une source lumineuse, un réflecteur du genre elliptique, dont un premier foyer est situé au voisinage de la source, une lentille convergente dont un plan focal passe au voisinage d'un second foyer du récepteur, et une glace de fermeture du projecteur.

Dans certains cas, la lentille peut être constituée par la glace elle-même.

Lorsqu'un tel projecteur doit engendrer un faisceau à coupure, tel qu'un faisceau de croisement ou un faisceau antibrouillard, il comporte un cache interposé entre la source lumineuse et la lentille, qui occulte la partie du rayonnement, qui autrement se propagerait au-dessus de cette coupure.

Une difficulté de ce type de projecteur réside alors dans la difficulté qu'il y a à modifier le profil de la coupure. Une telle modification doit être envisagée notamment lorsqu'un projecteur, conçu par exemple pour un sens de circulation à droite, doit former un faisceau lumineux, coupé, adapté à une circulation à gauche.

Il peut être également souhaitable de réaliser un projecteur universel capable d'engendrer sélectivement un faisceau de croisement, un faisceau antibrouillard ou un faisceau sans coupure.

Une solution, connue en soi, pour modifier le profil de la coupure, consiste à intervenir sur le cache du projecteur pour en modifier le profil de coupure.

On connaît du document EP 0 780 624 un projecteur elliptique de type comportant un cache présentant un bord définissant à premier profil de coupure particulier pour le faisceau lumineux émis et des moyens de pivotement du cache dans le plan vertical du cache pour le positionner sélectivement dans deux positions, une première position dans laquelle le bord du cache est positionné sur le trajet des rayons lumineux pour former un faisceau lumineux avec ledit premier profil de coupure, et une seconde position dans laquelle le bord du cache est positionné dans le trajet des rayons lumineux de manière décalée angulairement par rapport à la première position pour former un faisceau lumineux avec un second profil de coupure.

En outre, une solution pour former sélectivement dans un projecteur universel à réflecteur elliptique, une fonction code ou une fonction route, consiste à faire basculer le cache mobile du projecteur pour le positionner dans ou hors du faisceau lumineux émis.

A ce sujet, on connaît déjà un projecteur elliptique du type comportant un cache basculant entre une position code et une position route, autour d'un axe généralement horizontal et parallèle à l'axe optique.

Le cache est monté à pivotement sur une partie d'ossature du projecteur, au niveau d'un de ses côtés latéraux, et le mouvement de pivotement du cache s'effectue de telle sorte qu'il reste toujours dans le plan vertical transversal à l'axe optique où il se trouve dans la position code.

Un tel projecteur présente plusieurs inconvénients.

Tout d'abord, avec un tel agencement de cache basculant autour d'un axe parallèle à l'axe optique, compte tenu du faible espace disponible dans le boîtier du projecteur, en dessous du cache, il est impossible de dégager complètement le cache du faisceau lumineux émis, du côté de l'axe de rotation dudit cache.

Ainsi, lorsque ce projecteur fonctionne en route, le faisceau lumineux émis présente une intensité lumineuse réduite due au fait qu'une partie du cache située du côté de l'axe de rotation de ce dernier, reste toujours sur le trajet des rayons lumineux émis.

En outre, le montage du cache à pivotement sur un de ses côtés latéraux, engendre un mauvais équilibrage du cache qui n'est pas soutenu de l'autre côté.

Enfin, un tel agencement de cache basculant nécessite l'utilisation d'un moyen d'actionnement encombrant et puissant pour assurer avec la rapidité voulue le retour du cache dans la position route vers la position code.

La présente invention propose alors un nouveau projecteur universel de type elliptique capable d'assurer sélectivement plusieurs fonctions, la fonction code pour trafic à droite ou pour trafic à gauche, la fonction antibrouillard et la fonction route, c'est à dire, d'engendrer sélectivement un faisceau à coupure pour trafic à droite ou trafic à gauche ou antibrouillard ou encore un faisceau sans coupure, dans lequel l'agencement de cache mobile permet dans une position route de dégager complètement le cache du faisceau lumineux émis, et dans lequel l'encombrement du système d'actionnement du cache pour son changement de position est optimisé.

Plus particulièrement, selon l'invention, il est prévu un projecteur pour véhicule automobile comprenant un bloc optique comportant une source lumineuse, un réflecteur du genre elliptique dont un premier foyer est situé au voisinage de la source, une lentille convergente dont un plan focal passe au voisinage d'un second foyer du réflecteur, et un cache prévu entre le réflecteur et la lentille qui présente un bord définissant un premier profil de coupure particulier pour le faisceau lumineux émis.

Il est caractérisé en ce qu'il est prévu des moyens de pivotement du bloc optique autour de l'axe optique du projecteur, pour amener sélectivement le cache dans deux positions, une première position dans laquelle ledit bord du cache est positionné sur le trajet des rayons lumineux avec ledit premier profil de coupure, et une seconde position dans laquelle ledit bord du cache est positionné sur le trajet des rayons lumineux de manière décalée angulairement par rapport à la première position pour former un faisceau lumineux avec un deuxième profil de coupure.

Selon d'autres caractéristiques avantageuses et non limitatives de l'invention :
- les moyens de pivotement du bloc optique sont des moyens de basculement d'un angle de 15° environ dans le plan vertical du cache,
- le basculement du bloc optique est réalisé par l'intermédiaire du correcteur statique ou dynamique de l'orientation du réflecteur,
- les moyens de pivotement du bloc optique comprennent un moteur électrique apte à entraîner en rotation une cage dans laquelle est monté le bloc optique,
- il est prévu des moyens de basculement du cache pour l'amener sélectivement dans deux positions, la première position, et une troisième position dans laquelle ledit bord du cache est sensiblement positionné hors du trajet des rayons lumineux pour former un faisceau lumineux sans coupure,
- l'axe de basculement du cache est un axe généralement horizontal et transversal à l'axe optique du projecteur,
- le cache comporte une lame solidaire d'un arbre susceptible de tourner dans deux paliers formés dans une pièce d'ossature du projecteur du réflecteur,
- lesdits moyens de basculement du cache comprennent une tige d'actionnement dont une extrémité est liée au cache et dont une autre extrémité est raccordée à un électroaimant pourvu d'un ressort de rappel, ledit électroaimant étant destiné à être alimenté en courant pour actionner ladite tige de façon à ce qu'elle entraîne le basculement dudit cache de la première vers la troisième position,
- lesdits moyens de basculement du cache comprennent un levier d'actionnement manuel lié au cache,
- le cache est conformé sous la forme d'une lame solidaire d'un contrepoids de manière qu'il présente un centre de gravité situé dans la première position, en dessous de son axe de basculement de telle sorte que ledit cache à tendance intrinsèquement à se placer dans la première position,
- il comporte au moins une butée montée sur un desdits paliers, présentant une forme en L avec une partie horizontale s'étendant vers l'avant du projecteur dans un plan contenant l'axe de basculement du cache et une partie verticale s'étendant au-dessus de l'axe de basculement du cache, ladite partie horizontale définissant la troisième position du cache et ladite partie verticale définissant les première et seconde positions du cache,
- les première et seconde positions du cache sont des positions code pour trafic à droite, trafic à gauche ou antibrouillard et la troisième position du cache est une position route.

La description qui va suivre en regard des dessins annexés donnés à titre d'exemples non limitatifs, fera bien comprendre à quoi consiste l'invention et comment elle peut être réalisée.
Sur les dessins annexés :
- la figure 1 est une vue schématique en perspective éclatée d'un mode de réalisation du projecteur selon l'invention,
- les figures 2 à 4 sont des vues schématiques partielles en perspective du projecteur de la figure 1 dans trois configurations différentes d'éclairage,
- la figure 5 est une vue schématique partielle en coupe horizontale axiale d'un deuxième mode de réalisation de projecteur selon l'invention,
- la figure 6 est une vue de face d'une partie du projecteur de la figure 5 dans deux configurations d'éclairage différentes,
- la figure 7 est une vue schématique de face d'un troisième mode de réalisation du projecteur selon l'invention,
- la figure 8 est une vue schématique en coupe verticale axiale du projecteur de la figure 7, et
- la figure 9 est une vue schématique en perspective de trois quarts d'un mode de réalisation préféré de la pièce d'ossature intermédiaire du projecteur selon l'invention.

Préliminairement, on notera que d'une figure à l'autre les éléments identiques ou similaires sont référencés dans la mesure du possible par les mêmes signes de référence et ne seront pas redécrits à chaque fois.

Sur les figures on a représenté un projecteur pour véhicule automobile qui comporte une lampe 10 montée dans le fond d'un réflecteur 20 du type elliptique de telle sorte que le filament 11 de la lampe se situe au voisinage d'un premier foyer du réflecteur 20.

Le projecteur comporte en outre une lentille convergente 75 montée sur une partie d'ossature 40 du projecteur solidaire du réflecteur.

Le plan focal de la lentille 75 passe au voisinage du second foyer du réflecteur 20.

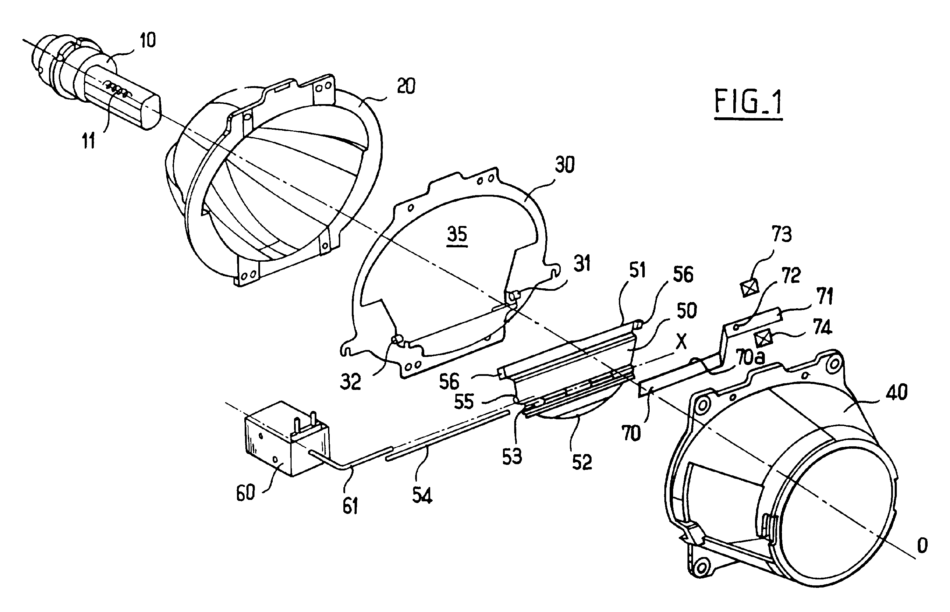

Le projecteur comporte un cache mobile 50 qui dans le mode de réalisation de la figure 1 est un premier cache, prévu entre le réflecteur 20 et la lentille 75.

Il est monté dans une pièce d'ossature intermédiaire 30 du projecteur solidaire du réflecteur 20.

L'ensemble constituant le bloc optique est monté de façon non représentée dans un boîtier fermé par une glace.

Le cache 50 positionné à proximité du plan focal de la lentille 75 présente un bord 51 apte à définir dans le plan focal de ladite lentille, un premier profil de coupure particulier pour le faisceau lumineux émis. Ici, le bord 51 défini un profil de coupure pour trafic à droite.

Le cache 50 est monté à pivotement autour d'un axe de pivotement X généralement horizontal et transversal à l'axe optique haut du projecteur.

Avantageusement, le montage à pivotement du cache 50 sur la pièce d'ossature 30 du projecteur est réalisé par l'intermédiaire d'un arbre 54 introduit au travers dudit cache dans des orifices 53 et monté dans deux paliers 31,32 de la pièce d'ossature 30 du projecteur de telle sorte qu'il est libre de tourner dans ces paliers.

Comme le montre plus particulièrement la figure 1, le projecteur comprend des moyens de basculement du cache 50 pour l'amener sélectivement dans deux positions, une première position verticale dans laquelle le bord 51 du cache 50 est positionné dans le plan focal de la lentille sur le trajet des rayons lumineux pour former un faisceau lumineux avec ledit premier profil de coupure, et une seconde position horizontale dans laquelle le bord 51 du cache est positionné hors du trajet des rayons lumineux pour former ici un faisceau lumineux sans coupure.

Selon l'exemple représenté sur la figure 1, la première position est une position code pour trafic à droite et la seconde position est une position route.

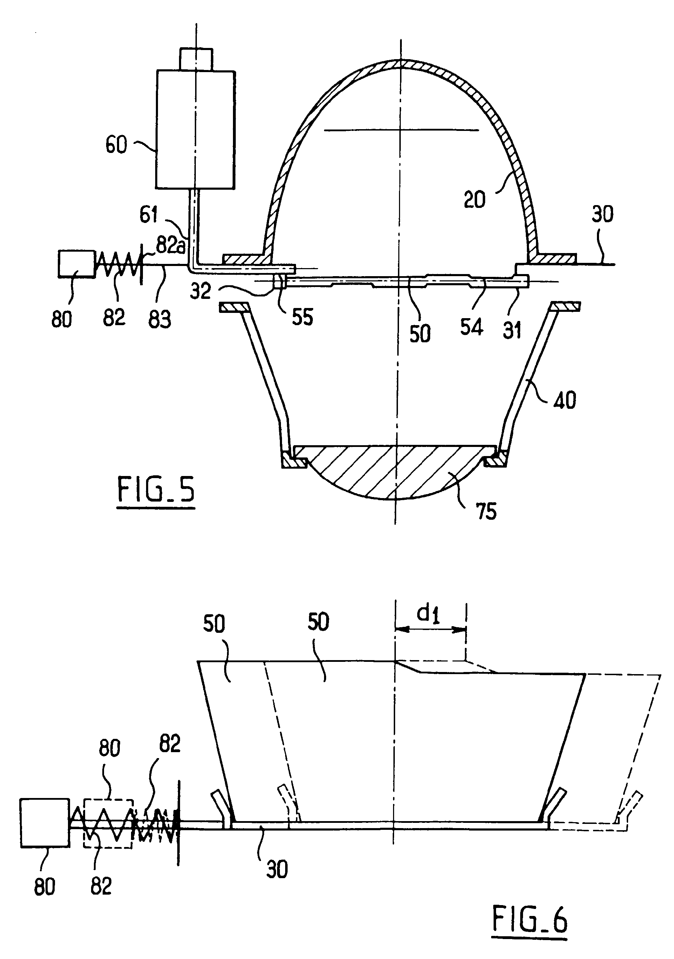

Il est à noter que la seconde position horizontale du cache 50, est une troisième position du cache 50 dans les modes de réalisation représentés sur les figures 5 à 8.

Bien entendu, on pourrait prévoir que la première position correspond à la formation d'un faisceau à coupure différent du faisceau code.

Le cache 50 se présente sous la forme d'une lame qui présente une épaisseur telle que lorsqu'il est positionné de manière horizontale dans la position route, il n'occulte pratiquement pas le faisceau lumineux émis par la source lumineuse et réfléchi par le réflecteur.

Les moyens de basculement du cache 50 autour de l'axe X comprennent ici un moyen de manoeuvre comportant une tige d'actionnement 61 dont une extrémité est liée au cache en étant introduite dans un logement 55 prévu sur un côté latéral du cache 50. L'autre extrémité de la tige est raccordée à un électroaimant 60 apte à actionner la tige 61 en la poussant ou en la tirant de telle sorte qu'elle entraîne le pivotement du cache 50 entre la première position code et la position route.

Plus particulièrement, l'électroaimant 60 comporte un boîtier dans lequel sont positionnés une bobine (dans le fond du boîtier), et un noyau de façon classique. Le noyau est mobile en translation à l'intérieur du boîtier et est relié à l'extrémité de la tige d'actionnement 61.

En variante, le noyau pourrait être une partie même de la tige 61.

Le noyau est sollicité par un ressort de rappel. Ce ressort de rappel a tendance à rappeler le noyau dans une position de repos reculée. Lorsque la bobine de l'électroaimant est alimentée en courant, elle déplace le noyau de sorte qu'elle entraîne vers l'avant la tige d'actionnement 61, tout en comprimant le ressort de rappel contre la paroi interne du boîtier. Lorsque la bobine de l'électroaimant n'est plus alimentée en courant, le noyau n'est plus sollicité par la bobine et le ressort de rappel ramène le noyau et la tige 61 vers la position de repos précitée.

Lorsque l'électroaimant est alimenté en courant, le mouvement exercé sur la tige 61 amène celle-ci à provoquer le basculement du cache 50 de sa première position verticale code vers sa position horizontale route et le maintien de cette dernière position.

Quand l'électroaimant n'est plus alimenté en courant, le ressort de rappel ramène la tige d'actionnement dans sa position initiale, le cache 50 bascule dans le sens inverse pour revenir vers sa position code verticale.

Selon une variante de réalisation non représentée, on peut prévoir que le mouvement de basculement du cache 50 de la position verticale code vers la position horizontale route soit réalisé par l'intermédiaire d'un levier d'actionnement manuel relié au cache 50.

Avantageusement, la lame constituant le cache 50 se prolonge en dessous de l'axe de rotation X du cache et est solidaire d'un contrepoids 52.

Il peut être prévu que ce contrepoids soit monté sur la lame ou soit formé d'une seule pièce avec ladite lame. Le contrepoids 52 fait que dans la première position du cache 50, le centre de gravité de la lame est déplacé en dessous de son axe de rotation et ainsi naturellement le cache 50 a tendance à se placer dans la première position code verticale avec son contrepoids 52 positionné vers le bas.

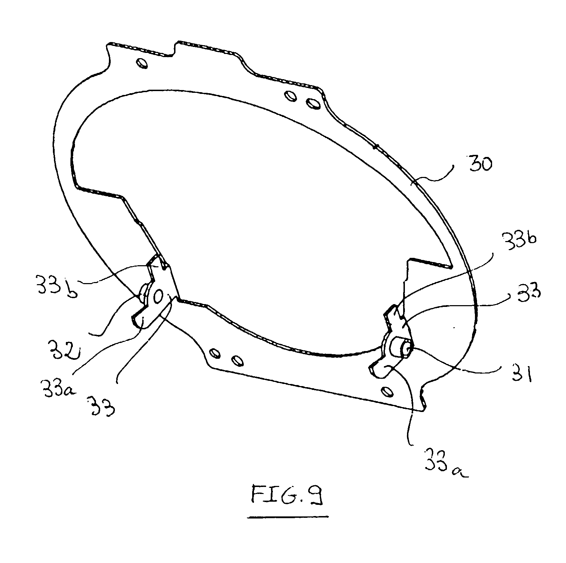

On remarquera sur la figure 9 que la pièce d'ossature 30 comporte une butée 33 montée sur chacun desdits paliers 31,32, présentant une forme en L avec une partie horizontale 33a s'étendant vers l'avant du projecteur dans un plan contenant l'axe X de basculement du cache 50 et une partie verticale 33b s'étendant au-dessus de l'axe X de basculement du cache 50, ladite partie horizontale 33a définissant la position horizontale route du cache 50 et ladite partie verticale 33b définissant les positions verticales code du cache 50.

L'encombrement de la lame 50 en dessous de l'axe de rotation est minimal et le contrepoids d'encombrement réduit ne nécessite aucune place supplémentaire par rapport à la place initialement prévue dans le boîtier du projecteur classique.

Le comportement du dispositif est le suivant :

Lorsque l'électroaimant n'est plus alimenté en courant ou lorsque le levier d'actionnement manuel non représenté est libéré, le cache 50 revient dans sa position verticale code initiale sous l'action combinée du contrepoids 52 et du ressort de rappel de l'électroaimant ou du ressort de rappel du levier d'actionnement manuel.

Ainsi, selon le mode de réalisation préférentiel représenté sur les figures, le ressort de rappel n'a pas besoin d'exercer une force de rappel très importante sur la tige pour provoquer le retour du cache 50 de la position route vers la première position code avec la rapidité voulue puisqu'il est assisté par la force de gravité exercée par le contrepoids 52. On peut donc choisir un ressort de rappel moins encombrant et moins coûteux. De plus, le contrepoids et le ressort de rappel contribuent tous deux à maintenir le cache dans une position stable lorsque l'électroaimant n'est pas alimenté en courant pour éviter notamment que le cache vibre lorsque le véhicule automobile roule.

Il est prévu également sur le cache 50 deux pattes latérales 56 qui viennent prendre appui contre des bords d'une ouverture centrale 35 de la pièce d'ossature 30. Ces pattes latérales sont décalées par rapport au plan de précisément dans le plan de la pièce d'ossature 30 qui est le plan focal la lame 50 d'une distance égale à l'épaisseur de la pièce d'ossature de telle sorte que dans la première position verticale code du cache 50, celui-ci vient se placer de la lentille du projecteur.

Selon le mode de réalisation représenté de la figure 1, il est prévu en outre un second cache 70 disposé devant le premier cache 50, à distance de celui-ci. Ce second cache est mobile sélectivement entre deux positions. Dans une première position le bord 70a du second cache 70 est positionné sur le trajet des rayons lumineux pour former avec le premier cache 50 un faisceau lumineux avec un deuxième profil de coupure particulier.

On notera sur les figures 1 à 4 que la distance entre les deux caches 50, 70 est volontairement exagérée pour plus de clarté.

Ici, le second cache 70 présente une forme rectangulaire à bords droits de longueur sensiblement égale à la moitié de celle du premier cache 50. Le second cache 70 s'étend sur la partie gauche du cache 50 en le regardant de face, de sorte qu'il permet dans sa première position verticale de relever la coupure initialement formée par le premier cache pour réaliser une coupure pour trafic à gauche dans le faisceau lumineux émis par le projecteur.

Dans une deuxième position du second cache 70, le bord 70a du second cache 70 est sensiblement positionné hors du trajet des rayons lumineux pour former soit un faisceau lumineux avec le premier profil de coupure (le premier cache 50 étant alors relevé), soit un faisceau lumineux sans coupure (le premier cache 50 étant abaissé).

Ce second cache 70 est monté à pivotement sur une partie latérale du projecteur par l'intermédiaire d'un levier 71 coudé avec une partie apte à faire saillie à l'extérieur du boîtier pour être actionnée manuellement. Le levier est monté en rotation sur l'axe 72 s'étendant horizontalement et sensiblement parallèlement à l'axe optique O du projecteur. Le second cache 70 pivote alors dans un plan vertical transversal à l'axe optique. Il est prévu également deux butées latérales 73,74 pour le levier d'actionnement manuel 71 définissant les deux positions du second cache 70.

Le deuxième cache 70 est positionné à une distance d du premier cache la plus faible possible.

On notera que le second cache 70 de forme rectangulaire à bords droits, placé dans un plan parallèle et très voisin au plan contenant le premier cache, présente une faible hauteur de sorte que dans sa deuxième position abaissée il n'occulte pas une partie du faisceau lumineux émis par le projecteur.

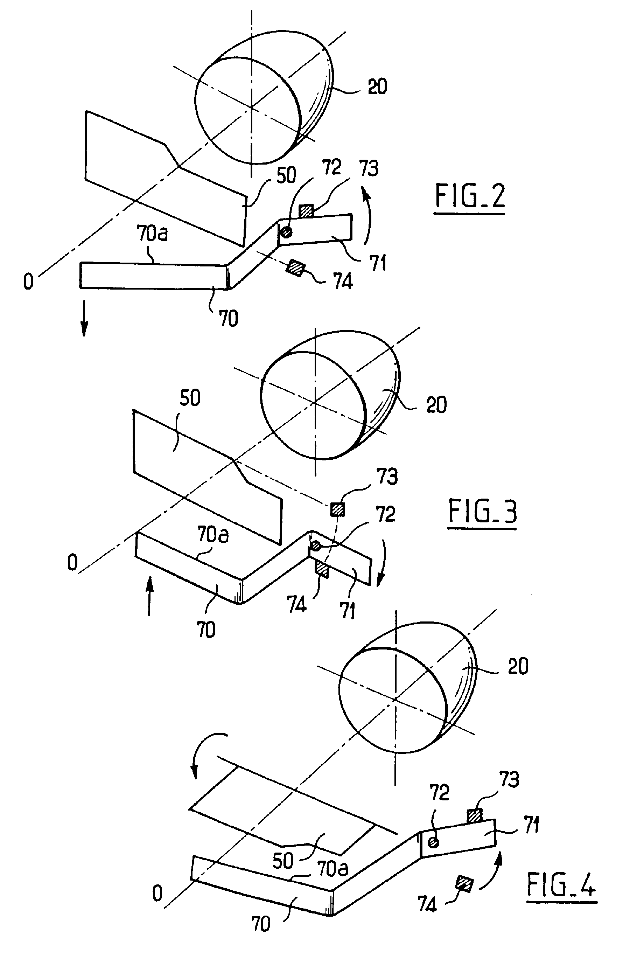

Sur la figure 2, on a représenté le premier cache 50 dans sa première position verticale combinée avec la deuxième position abaissée du second cache 70, de sorte que le projecteur forme un faisceau lumineux avec une coupure pour trafic à droite.

Sur la figure 3, les deux caches 50 et 70 sont relevés (c'est à dire dans leur première position) de sorte qu'ils se superposent et le faisceau lumineux émis par le projecteur présente une coupure pour trafic à gauche.

Il est à noter que le second cache 70 ne se situe pas, en position relevée, dans le plan focal de la lentille. On accepte alors ici une coupure légèrement dégradée, mais dans une variante non représentée, on s'arrange pour que le second cache soit situé sensiblement dans le plan focal de la lentille.

Sur la figure 4, les deux caches 50,70 sont abaissés pour former un faisceau d'éclairage sans coupure, ici un faisceau route.

Sur la figure 5, on a représenté un deuxième mode de réalisation du projecteur selon l'invention. Selon le mode de réalisation, il est prévu outre les moyens de basculement, des moyens de translation du cache 50 selon la direction transversale à l'axe optique O du projecteur, pour amener ledit cache 50 sélectivement de la première position du cache 50 avec son bord 51 dans le trajet des rayons lumineux pour former un faisceau à coupure pour trafic à droite, et à une deuxième position dans laquelle ledit bord du cache 50 est décalé transversalement par rapport à l'axe optique O dans le trajet des rayons lumineux, de manière à former un faisceau lumineux avec un deuxième profil de coupure, ici une coupure pour trafic à gauche.

Les moyens de translation du cache 50 comprennent selon le mode de réalisation représenté, une tige d'actionnement manuel 80,83 liée au cache et pourvue d'un ressort de rappel 82 de la deuxième vers la première position du cache 50.

On peut également prévoir dans un mode de réalisation non représenté que les moyens de translation du cache comprennent une tige d'actionnement dont une extrémité est liée au cache et dont une autre extrémité est raccordée à un électroaimant pourvu d'un ressort de rappel, ledit électroaimant étant destiné à être alimenté en courant pour actionner ladite tige de façon à ce qu'elle entraîne la translation du cache de sa première vers sa deuxième position.

Comme le montre plus particulièrement la figure 6, le déplacement à translation du cache 50 est réalisé sur une distance d1 de l'ordre de 10 millimètres de façon à déplacer la coupure latéralement vers la gauche en regardant le cache 50 de face et réaliser dans le faisceau lumineux une coupure pour trafic à gauche.

Dans la deuxième position du cache (représentée en traits pointillés sur la figure 6), le ressort de rappel 82 est comprimé contre une surface de butée 82a, et lorsque l'on libère le ressort de rappel, celui-ci ramène automatiquement le cache 50 dans sa première position initiale (représentée en trait plein sur la figure 6).

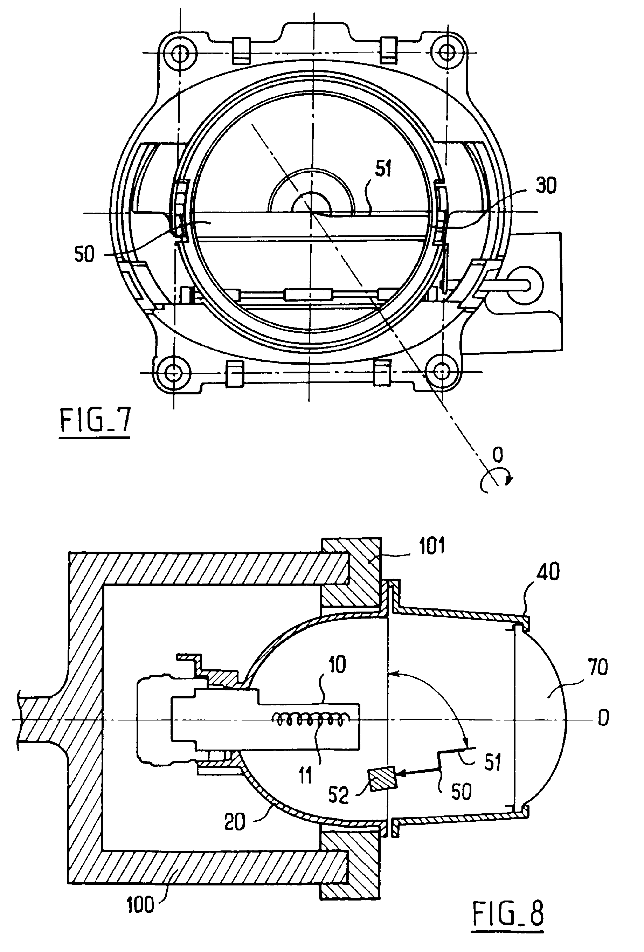

Sur les figures 7 et 8, on a représenté un autre mode de réalisation du projecteur selon l'invention, selon lequel il est prévu des moyens de pivotement du bloc optique autour de l'axe optique O du projecteur pour amener sélectivement le cache 50 dans ladite première position et dans une deuxième position dans laquelle le bord 51 du cache 50 est positionné dans le trajet des rayons lumineux de façon décalée angulairement dans le plan vertical du cache, pour former un faisceau lumineux avec un deuxième profil de coupure. Ici, on relève la coupure de manière à former un faisceau lumineux à coupure pour trafic à gauche, alors que lorsque le cache est dans sa première position initiale, il forme un faisceau lumineux à coupure pour trafic à droite, comme représenté de face sur la figure 7.

Bien entendu, le cache 50 peut être basculé de sa première position verticale vers sa position horizontale (voir la figure 8) pour former un faisceau à coupure et un faisceau sans coupure, comme cela a déjà été décrit précédemment.

Les moyens de pivotement du bloc optique peuvent être des moyens de basculement d'un angle de 15 degrés environ dans le plan vertical du cache.

Cela peut être réalisé par l'intermédiaire d'un correcteur statique ou dynamique de l'orientation du réflecteur.

Comme le montre plus particulièrement la figure 8 les moyens de pivotement du bloc optique peuvent également comprendre un moteur électrique (non représenté) apte à entraîner en rotation une cage 100 dans laquelle est monté le bloc optique. Les moyens de rotation permettent pour décaler angulairement dans le plan vertical le bloc optique d'un angle α déterminé afin de relever la coupure dans le faisceau lumineux émis et former un faisceau lumineux à coupure pour trafic à gauche avec un cache conformé pour réaliser en première position un faisceau lumineux à coupure pour trafic à droite. Cet angle α est par exemple égal à 15° quand il s'agit de passer d'une position code européen pour trafic à gauche à une position code européen pour trafic à droite et inversement.

La présente invention n'est nullement limitée aux modes de réalisation décrits et représentés mais l'homme de métier saura y apporter toute variante conforme à son esprit.

## Revendications

1. Projecteur pour véhicule automobile, comprenant un bloc optique comportant une source lumineuse (11), un réflecteur (20) du genre elliptique dont un premier foyer est situé au voisinage de la source, une lentille convergente dont un plan focal passe au voisinage d'un second foyer du réflecteur, et un cache (30) prévu entre le réflecteur (20) et la lentille, qui présente un bord (51) définissant un premier profil de coupure particulier pour le faisceau lumineux émis, caractérisé en ce qu'il est prévu des moyens de pivotement du bloc optique autour de l'axe optique (O) du projecteur pour amener sélectivement le cache (50) dans deux positions, une première position dans laquelle ledit bord du cache est positionné sur le trajet des rayons lumineux pour former un faisceau lumineux avec ledit profil de coupure, et une seconde position dans laquelle ledit bord du cache est positionné sur le trajet des rayons lumineux de manière décalée angulairement par rapport à la première position pour former un faisceau lumineux avec un deuxième profil de coupure.

2. Projecteur selon la revendication 1, caractérisé en ce que les moyens de pivotement du bloc optique sont des moyens de basculement d'un angle de 15 degrés environ dans le plan vertical du cache.

3. Projecteur selon la revendication 2, caractérisé en ce que le basculement du bloc optique est réalisé par l'intermédiaire du correcteur statique ou dynamique de l'orientation du réflecteur.

4. Projecteur selon la revendication 1, caractérisé en ce que les moyens de pivotement du bloc optique comprennent un moteur électrique apte à entraîner en rotation une cage (100) dans laquelle est monté le bloc optique.

5. Projecteur selon l'une des revendications 1 à 4, caractérisé en ce qu'il est prévu des moyens de basculement du cache pour l'amener sélectivement dans deux positions, la première position, et une troisième position dans laquelle ledit bord (51) du cache (50) est sensiblement positionné hors du trajet des rayons lumineux pour former un second faisceau lumineux sans coupure.

6. Projecteur selon la revendication 5, caractérisé en ce que l'axe de basculement du cache est un axe généralement horizontal et transversal (X) à l'axe optique du projecteur.

7. Projecteur selon la revendication 6, caractérisé en ce que le cache comporte une lame (50) solidaire d'un arbre (54) susceptible de tourner dans deux paliers (31,32) formés dans une pièce d'ossature du projecteur solidaire du réflecteur.

8. Projecteur selon l'une des revendications 5 à 7, caractérisé en ce que lesdits moyens de basculement du cache comprennent une tige d'actionnement (61) dont une extrémité est liée au cache (50) et dont une autre extrémité est raccordée à un électroaimant (60) pourvu d'un ressort de rappel, ledit électroaimant étant destiné à être alimenté en courant pour actionner ladite tige de façon à ce qu'elle entraîne le basculement dudit cache de la première vers la troisième position.

9. Projecteur selon l'une des revendications 5 à 7, caractérisé en ce que lesdits moyens de basculement du cache comprennent un levier d'actionnement manuel lié au cache.

10. Projecteur selon l'une des revendications 5 à 9, caractérisé en ce que le cache (50) est conformé sous la forme d'une lame solidaire d'un contrepoids (52) de manière qu'il présente un centre de gravité situé, dans la première position, en dessous de son axe de basculement de telle sorte que ledit cache à tendance intrinsèquement à se placer dans la première position.

11. Projecteur selon l'une des revendications 6 à 10, caractérisé en ce qu'il comporte au moins une butée (33) montée sur un desdits paliers (31,32), présentant une forme en L avec une partie horizontale (33a) s'étendant vers l'avant du projecteur dans un plan contenant l'axe de basculement du cache (50) et une partie verticale (33b) s'étendant au-dessus de l'axe de basculement du cache (50), ladite partie horizontale (33a) définissant la troisième position du cache et ladite partie verticale (33b) définissant les première et seconde positions du cache (50).

12. Projecteur selon l'une des revendications 5 à 11, caractérisé en ce que les première et seconde positions du cache (50) sont des positions codes pour trafic à droite, trafic à gauche ou antibrouillard et la troisième position du cache (50) est une position route.
